# EUROPÄISCHE PATENTSCHRIFT

(11) **EP 1 186 275 B1**
(45) Veröffentlichungstag und Bekanntmachung des Hinweises auf die Patenterteilung: **28.11.2007**
(21) Anmeldenummer: 00119812.6
(22) Anmeldetag: 12.09.2000
(51) Int. Cl.: A61C 8/00

(54) **Kieferimplantat**
Dental implant
Implant dentaire

(43) Veröffentlichungstag der Anmeldung: 13.03.2002
(73) Patentinhaber: Hermann, Werner, 6312 Steinhausen (CH)
(72) Erfinder: Hermann, Werner, 6312 Steinhausen (CH)
(74) Vertreter: OK pat AG

(56) Entgegenhaltungen:
- EP-A- 1 021 996
- WO-A-99/38451
- US-A- 4 468 200
- US-A- 5 000 686
- US-A- 5 556 280

## Beschreibung

Gegenstand der Erfindung ist ein Kieferimplantat für einen Zahnersatz nach Anspruch 1.

Natürliche Zähne erfahren im Laufe der Zeit verschiedenste Beeinträchtigungen, beispielsweise wegen mangelhafter Mundhygiene, altersgemässer Abnutzung oder durch Unfälle. Diese Beeinträchtigungen manifestieren sich als Beschädigungen von Zahnbereichen einzelner Zähne oder als Fehlen ganzer Zähne und Zahngruppen. Herkömmlicherweise werden fehlende Bereiche von Zähnen durch Onlays, Inlays oder Kronen ersetzt, und fehlende Zähne oder Zahngruppen werden entweder durch Brücken oder durch Prothesen ersetzt. Onlays, Inlays und Kronen werden fest am noch vorhandenem Restzahn fixiert, während Brükken fest an den den fehlenden Zähnen und Zahngruppen benachbarten, noch vorhandenen Zähnen montiert werden. Prothesen sind für die tägliche Reinigung und für die Nachtruhe entfernbar und werden entweder an noch vorhandenem echtem Zahnmaterial befestigt oder sind so ausgebildet, dass sie sich durch ihre Formgebung am Kiefer und am Gaumen abstützen.

Das oben beschriebene Vorgehen zum Ersetzen fehlender Zahnbereiche und Zähne hat zahlreiche Nachteile, die im folgenden beschrieben werden.

Ein gravierender Nachteil ist in der Notwendigkeit zu sehen, noch vorhandenes und im allgemeinen gesundes Zahnmaterial zu opfern. Der Bereich, an welchem ein Zahnersatzteil zu montieren ist, muss vorgängig präpariert werden. Zu diesem Zweck ist es jeweils erforderlich, Zahnmaterial des zu ergänzenden Restzahnes oder der benachbarten Zähne von zu ersetzenden Zähnen oder Zahngruppen abzuschleifen. Da einmal entferntes Zahnmaterial vom Körper nicht nachgebildet wird, ist jedes Abtragen von noch gesundem Zahnmaterial natürlich unerwünscht und sollte möglichst vermieden werden, insbesondere im Hinblick auf weitere Zahnreparaturen im gleichen Kieferbereich, die meist nach einiger Zeit notwendig werden, weil die Zahnersatzteile einem gewissen Verschleiss unterliegen, und die das Abschleifen von weiterem Zahnmaterial nötig machen.

Ein weiterer Nachteil der herkömmlich durchgeführten Gebissreparaturen betrifft insbesondere den Ersatz ganzer Zähne und Zahngruppen. Ein Ersatz durch eine Brücke ist häufig nicht sehr dauerhaft und in vielen Fällen auch optisch unbefriedigend, während ein Ersatz durch eine Prothese vor allem wegen mangelndem Tragkomfort und einer Beeinträchtigung der Lebensqualität unerwünscht ist.

Die oben beschriebenen herkömmlichen Verfahren zum Ersetzen von beschädigten oder fehlenden Zahnbereichen oder Zähnen beruhen auf dem Prinzip, nur diejenigen fehlenden Partien von Zähnen oder Zahngruppen zu ersetzen, die sichtbar sind bzw. die über das Zahnfleisch hinaus in die Mundhöhle ragen.

Infolge der erwähnten Nachteile dieser herkömmlichen Verfahren wird seit einiger Zeit versucht, Gebissreparaturen mit Zahnersatz durchzuführen, dessen sichtbare Bereiche sich nicht auf Restzahnbereiche oder Restzähne sondern auf Kieferimplantate abstützen. Ein solcher Zahnersatz ersetzt also einen gesamten Zahn, wobei die Kieferimplantate gewissermassen die Funktion der Zahnwurzel übernehmen. Gegenüber der natürlichen Gebissanlage besteht aber diesbezüglich ein wesentlicher Unterschied. In der natürlichen Gebissanlage besteht aber ein wesentlicher Unterschied. Im natürlichen Gebiss besitzt bekanntlich jeder Zahn seine eigene Zahnwurzel, und entsprechend ist zur Abstützung eines einzelnen Zahnersatzteiles auch stets eine Ersatzzahnwurzel in Form eines Kieferimplantates notwendig. Sind aber Zahngruppen von zwei und mehr benachbarten Zähnen zu ersetzen, so muss nicht jeder zu ersetzende Zahn eine eigene Ersatzzahnwurzel erhalten; es muss also nicht an jeder Stelle eines zu ersetzenden Zahnes ein Kieferimplantat vorgesehen werden, sondern es reichen im allgemeinen zwei Kieferimplantate, um den Ersatz mehrerer Zähne zu befestigen; je nach den Verhältnissen reicht sogar ein einziges Kieferimplantat aus, um den Ersatz zweier benachbarter Zähne zu befestigen.

Ein bedeutender Vorteil von Zahnersatz mit Implantatbasis ist darin zu sehen, dass sich, vorausgesetzt der Kieferknochen bleibe gesund, die Fixierung des Kieferimplantates mit fortlaufender Zeit verbessert, während andere Zahnersatzteile wie Inlays, Onlays, Kronen und Brücken die Neigung haben, sich im Laufe der Zeit zu lockern.

Zahnersatz, der mit Hilfe von Kieferimplantaten hergestellt ist, umfasst mehrere Bestandteile, die nicht alle gleichzeitig bzw. an einem Stück in der Mundhöhle des Patienten montiert werden. Grundsätzlich ist es von Vorteil, den Zahnersatz so zu konzipieren, dass die definitiv implantierten und somit nicht mehr ersetzbaren Bestandteile in ihrer minimalsten Form ausgebildet bzw. auf den eigentlichen Implantatbereich beschränkt sind.

Im allgemeinen umfasst ein Zahnersatz ein Kieferimplantat und eine Suprakonstruktion. Das Kieferimplantat wird als erstes definitiv im Kieferknochen des Patienten angebracht, wo es im Laufe der Zeit einwächst oder, besser gesagt, von sich bildender Kochensubstanz umwachsen wird. Auf diesem Kieferimplantat wird dann als zweites die Suprakonstruktion des Zahnersatzes befestigt; die Suprakonstruktion umfasst mindestens den sichtbaren bzw. über das Zahnfleisch hinausragenden Teil des Zahnersatzes. Kieferimplantat und Suprakonstruktion müssen miteinander verbunden werden, wozu ein Verbindungskörper benutzt wird, der entweder mit dem Kieferimplantat oder mit der Suprakonstruktion integral ist oder der ein selbständiges Teil bildet.

Die Suprakonstruktion kann aus einem oder mehreren Elementen bestehen; gebräuchlich sind Suprakonstruktionen aus drei Elementen, nämlich erstens einem Verbindungskörper, zweitens einem Gerüst und drittens einer Verblendung, wobei Gerüst und Verblendung auch als Kappe bezeichnet werden. Der Verbindungskörper ist im fertigen Zustand nicht sichtbar; er wird, wie schon erwähnt, am Kieferimplantat befestigt, wobei für jedes Kieferimplantat ein Verbindungskörper vorgesehen ist. Das Gerüst ist mit einem oder mehreren Verbindungskörpern verbunden und bildet die Struktur des in die Mundhöhle ragenden Teils des Zahnersatzes. Die Verblendung ummantelt das Gerüst und bildet den einzigen tatsächlich sichtbaren Teil des Zahnersatzes; eine Verblendung gehört zu einem Gerüst und kann zu einem oder mehreren Verbindungskörpern und entsprechend zu einem oder mehreren Kieferimplantaten gehören. Bei Verwendung eines geeigneten Werkstoffes können das Gerüst und die Verblendung auch integral gefertigt sein

Das Kieferimplantat bildet somit den proximalsten Teil und die Verblendung den distalsten Teil des Zahnersatzes.

Die Verwendung dieser Vielzahl von konstruktiven Elementen zur Erzeugung eines Zahnersatzes bedingt, dass die gegenseitigen Befestigungen von Kieferknochen und Kieferimplantat, von Kieferimplantat und Verbindungskörper, von Verbindungskörper und Gerüst sowie von Gerüst und Verblendung bezüglich Geometrie, Festigkeit und Alterungsbeständigkeit einwandfrei ausgeführt werden. Besonderes sorgfältig muss die Befestigung des Kieferimplantates im Kieferknochen durchgeführt werden; beim Setzen des Kieferimplantates wird ja notwendigerweise die Substanz des Kieferknochens angegriffen; eine Korrektur eines beim Setzen des Kieferimplantates unterlaufenen Fehlers ist daher nicht in jedem Fall möglich und stets schwierig, zeitraubend und schmerzhaft.

Kieferimplantate können entweder in den Kieferknochen eingepflockt oder im Kieferknochen eingeschraubt werden, wobei das letztere Verfahren bevorzugt und häufiger durchgeführt wird, da die Gefahr einer lokalen Kieferzertrümmerung beim Einpflocken sehr gross ist. Bekannte Kieferimplantate, die eingeschraubt werden, weisen im allgemeinen über einen bedeutenden Teil ihrer Länge ein Aussengewinde auf und sind meist von ihrem am Patienten distal zu liegen kommenden Ende bis zu ihrem am Patienten proximal zu liegen kommenden Ende zulaufend ausgebildet. Sie haben unter anderem den Nachteil, dass das Schneiden von Gewinden im Kieferknochen und das Einschrauben des Kieferimplantates in das geschnittene Knochen-Muttergewinde nicht einfach durchzuführende Vorgänge sind, und dass die Kieferimplantate jeweils bis zu einer bestimmten Tiefe eingeschraubt werden müssen, damit sie tatsächlich fest und dauerhaft im Kieferknochen fixiert sind.

Die Aufgabe der Erfindung wird nun darin gesehen,
- ein Kieferimplantat der eingangs genannten Art zu schaffen, welches so ausgebildet ist, dass es sich in einfacher Weise und kieferknochenschonend einschrauben lässt und welches im implantierten Zustand einwandfrei fixiert ist, ohne dass eine bestimmte Einschraubtiefe genau eingehalten werden muss.

Die Lösung dieser Aufgabe erfolgt
- für das Kieferimplantat durch die Merkmale des Anspruchs 1.

Vorteilhafte Weiterbildungen des neuen Kieferimplantates werden durch die abhängigen Ansprüche 2 bis 11 definiert.

Das neue Kieferimplantat lässt sich dank seinem speziell ausgebildeten selbstschneidenden Aussengewinde verhältnismässig leicht implantieren, das heisst in den Kieferknochen einschrauben, wobei praktisch keine Gefahr besteht, dass der Kieferknochen beschädigt bzw. aufgesprengt wird. Da das Aussengewinde selbstschneidend ist, muss im Kieferknochen vorgängig kein Gewinde geschnitten sondern lediglich eine dem Kernkörper des Implantates entsprechende Bohrung erzeugt werden. Dies erleichtert die Arbeit des Dentisten beträchtlich, nicht nur, weil die Erzeugung einer Bohrung weit einfacher ist als das Schneiden eines Gewindes, sondern auch, weil die Implantierung in eine Bohrung viel einfacher ist als das Einschrauben in ein vorgängig erzeugtes Gewinde. Durch das neue Gewinde erfolgt in jedem Falle eine solide Fixierung des Kieferimplantates, wobei es nicht erforderlich ist, dass das Implantat eine genau vorgegebene Rotations-Winkellage einnimmt bzw. dass eine genau vorbestimmte Einschraubtiefe eingehalten wird. Dies trägt weiter dazu bei, den Vorgang der Implantierung des Kieferimplantates zu vereinfachen. Der Vorteil der einfachen Implantierung ist noch ausgeprägter, wenn ein Zahnersatz, natürlich nur für einen einzelnen Zahn, hergestellt wird, bei welchem Kieferimplantat und Suprakonstruktion, ggfs. ohne Verblendung, integral hergestellt sind und zusammen im Kiefer eines Patienten angeordnet werden; der Kieferimplantat-Bereich eines solchen integralen Zahnersatzes kann dann einfach soweit in den Kieferknochen eingeschraubt werden, bis der Suprakonstruktions-Abschnitt des Zahnersatzes seine richtige Rotations-Winkellage und seine richtige axiale Lage gefunden hat.

Das erfindungsgemässe Kieferimplantat unterscheidet sich vor allem durch die Formgebung seines Aussengewindes von herkömmlichen einschraubbaren Kieferimplantaten. Das neue Aussengewinde ist so ausgebildet, dass sich der Gewindequerschnitt längs des Gewindes laufend und kontinuierlich ändert. Im proximalen Bereich, wo der Durchmesser des konischen, mittleren Teils des Kieferimplantates, der auch als Implantatkörper bezeichnet wird, gering ist, hat der Gewindequerschnitt etwa die Form eines Trapezes mit breiter Grundlinie; im distalen Bereich des Implantatkörpers hat der Gewindequerschnitt die Form eines Trapezes mit schmaler Grundlinie oder im Extremalfall die Form eines spitzwinkligen Dreiecks; die dazwischenliegenden Gewindequerschnitte bilden bezüglich ihrer Form einen Übergang vom proximalen, breiten trapezartigen Gewindequerschnitt zum distalen, schmalen, spitzwinkligen, dreieckförmigen Gewindequerschnitt. Alle Gewindequerschnitte beruhen auf demselben fiktiven spitzwinkligen Dreleck, welches sich schraubenlinienartig um einen fiktiven zylindrischen Körper windet, dessen Rotationsachse mit der Längsachse des Kleferimplantates zusammenfällt. Durch zwei Rotationsflächen, deren Rotationsachsen ebenfalls mit der Längsachse des Kieferimplantates zusammenfallen, werden dann die tatsächlichen Gewindequerschnitte begrenzt, wobei die innere Rotationsfläche den Gewindekern bzw. den jeweiligen örtlichen Kerndurchmesser bildet, während die äussere Rotationsfläche nur fiktiv ist und den Jeweiligen örtlichen Aussendurchmesser des Gewindequerschnittes bestimmt bzw. eine Hüllfläche an das selbschneidende Aussengewinde bildet. Vorzugsweise handelt es sich bei diesen Rotationsflächen um Kegelstumpfflächen, die parallel oder nicht parallel verlaufen können. Die tatsächlichen Gewindequerschnitte sind also Ausschnitte aus dem beschriebenen fiktiven Dreieck, wobei es sich im proximalen Bereiche um Ausschnitte aus dem Grundlinlenbereich und im distalen Bereich um Ausschnitte aus dem Spitzenbereich des fiktiven Dreiecks handelt, hierbei ist es nicht notwendig, dass der distalste Bereich tatsächlich die nach Aussen ragende Spitze des fiktiven Dreiecks umfasst. Trotz seiner verhältnismässig komplizierten Formgebung lässt sich das Kleferimplantat nach der Erfindung bzw. sein Gewinde verhältnismässig einfach auf geeigneten programmierbaren Maschinen her stellen, da es eine geometrisch eindeutig definierbare Form aufweist

Vorteilhafterweise wird die Steigung des Gewindes, natürlich in Relation zum Gewindequerschnitt, so gewählt, dass zwischen zwei benachbarten Gewindegängen stets ein Abschnitt der Rotationsfläche vorhanden ist. Dadurch verbessert sich die Anlage des Kieferimplantates im Kieferknochen

Der Winkel des fiktiven Dreiecks, das die Basis für die Gewindequerschnitte liefert, und der am distalen Ende des Implantatkörpers den tatsächlichen Spitzenwinkel des dortigen Gewinde querschnittes bildet, ist nach unten nahezu unbegrenzt; er kann minimal sein und bei weniger als 1° liegen; er kann aber auch grösser sein und liegt maximal im Bereich von etwa 40°. Ist der Implantatkörper stark zulaufend ausgebildet, so sind eher spitzere Winkel zu wählen als in Fällen, in denen der Implantatkörper eher zylinderförmig ist.

Das fiktive Dreieck, welches als Basis für die Gewindequerschnitte angesehen werden kann, muss nicht gleichschenklig sein; die sich gegenüberliegenden Flanken des Gewihdequerschnittes eines Gewindeganges können also gegenüber der kegelstumpfförmigen Rotationsfläche des Implantatkörpers unterschiedliche Neigungen aufweisen. Auf diese Weise erhält man ein Gewinde mit einer sägezahnartigen Kontur.

Um eine Art Schneiden am Aussengewinde und eine Nut für die anfallenden Knochenspäne zu bilden, können die Gewindegänge durch Ausnehmungen unterbrochen sein. Diese Ausnehmungen können sich längs einer Erzeugenden der Rotationsfläche oder längs einer steilen Schraubenlinie an der Rotationsfläche erstrecken. Die so entstehenden Schneidkanten können derart bearbeitet werden, dass ein Freiwinkel entsteht.

Der distale Teil des Kieferimplantates ist vorzugsweise aussen konisch ausgebildet. Dadurch erreicht man einen dichtenden Sitz des Kieferimplantates im Kieferknochen und vermeidet den Eintritt von entzündungsauslösenden Verschmutzungen in den Raum zwischen Zahnfleisch und Kieferknochen einerseits und Kieferimplantat anderseits.

Der Zahnersatz ist so ausgebildet, dass sowohl eine problemlose lmplantierung des Kieferimplantates im Kieferknochen als auch eine einwandfreie gegenseitige Lage und Befestigung von Kieferimplantat und Suprakonstruktion realisiert werden kann. Dazu dienen die besondere Ausbildung des selbstschneidenden Gewindes und die konische und somit dichtende Formgebung des Kopfes des Kieferimplantates in Kombination mit der Ausbildung der zur gegenseitigen Anlage kommendenden Bereiche des Kieferimplantates und der Suprakonstruktion.

Ein zusätzlicher Vorteil des Zahnersatzes ist darin zu sehen, dass das Kieferimplantat einen verhältnismässig kleinen und die Suprakonstruktion einen verhältnismässig grossen Anteil des Zahnersatzes darstellt. Grundsätzlich sollte nämlich der Anteil des Kieferimplantates zwar so gross wie nötig aber auch so klein wie möglich sein, oder, mit anderen Worten, die Schnittstelle zwischen Kieferimplantat und Suprakonstruktion sollte so distal wie nötig aber so proximal wie möglich liegen. Der Grund dafür ist, dass zwar die Suprakonstruktion relativ leicht ausgetauscht bzw. ersetzt werden kann, dass aber eine Ersetzen des Kieferimplantates möglichst nicht nötig sein sollte, und dass es natürlich vorteilhaft ist, den Zahnersatz so zu gestalten, dass die ersetzbaren Bestandteile möglichst weitreichend ausgebildet sind. Für die gegenseitige Verbindung von Kieferimplantat und Suprakonstruktion wird meist an einem der Teile ein Vorsprung und am anderen der Teile eine Ausnehmung zur Aufnahme des Vorprunges vorgesehen, wobei es in Übereinstimmungen mit den obigen Darlegungen natürlich vorteilhafter ist, den Vorsprung an der Suprakonstruktion und die Ausnehmung am Kieferimplantat auszubilden.

Beim Zahnersatz umfassen Mittel zur gegenseitigen Befestigung von Kieferimplantat und Suprakonstruktion ein Gewinde am Kieferimplantat und ein komplementäres Gewinde an einem Verbindungskörper der Suprakonstruktion, wobei es natürlich vorteilhaft ist, das Gewinde des Kieferimplantates als Innengewinde und demzufolge das Gewinde des Verbindungskörpers als ein Aussengewinde auszubilden.

Das Verschrauben von Kieferimplantat und Verbindungskörper kann erleichtert werden durch zwei sich im verschraubten Zustand berührende gegensinnig zulaufende Flächen, das heisst eine Fläche am Kieferimplantat und eine komplementäre Fläche am Verbindungskörper. Durch die zulaufenden Flächen erhält man aber vor allem eine dichtende gegenseitige Anlage von Verbindungskörper und Kieferimplantat, so dass keine Verunreinigungen in den von Verbindungskörper und Kieferimplantat begrenzten Raum eindringen , sich dort ablagern und damit zu entzündungsverursachenden Herden werden können.

Die Suprakonstruktion umfasst den bereits erwähnten Verbindungskörper sowie eine Kappe, welche im wesentlichen den sichtbaren Teil des Zahnersatzes bildet.

Verbindungskörper und Kappe können integral hergestellt sein, bestehen aber im allgemeinen aus zwei aneinander befestigten Teilen. Um eine dichtende Verbindung von Verbindungskörper und Kappe zu erhalten und deren gegenseitige Befestigung zu erleichtern, ist es günstig, am Verbindungskörper eine Positionierfläche und an der Kappe eine Komplementärfläche vorzusehen, die sich im verbundenen Zustand berühren. Diese Flächen sind vorzugsweise gegenläufig zulaufend ausgebildet.

Besonders günstig ist es, wenn die Positionierfläche und/oder die Komplementärfläche eine Ausnehmung aufweisen, derart, dass im zusammengefügten Zustand ein Hohlraum entsteht, der durch die Positionierfläche und die Komplementärfläche begrenzt ist. Dieser Hohlraum dient zur Aufnahme von Zement oder Klebstoff, mit deren Hilfe die Kappe am Verbindungskörper befestigt wird. Die Verbindung von Kappe und Verbindungskörper kann auch mittels einer quer zur Längsachse des Zahnersatzes einschraubbaren Schraube, die vorne in diesen Hohlraum reicht, realisiert werden. Eine weitere Variante der Verbindung von Kappe und Verbindungskörper ist die thermische Herstellung eines Pressitzes.

Im allgemeinen ist die Kappe aus zwei Bestandteilen aufgebaut, nämlich aus einem Gerüst und einer Verblendung, die das Gerüst ummantelt.

Ein Zahnersatz weist ein einzelnes oder zwei Kieferimplantate und eine entsprechende Suprakonstruktion auf und bildet einen Ersatz für einen oder mehrere fehlende benachbarte ursprüngliche Zähne.

Weitere Vorteile und bevorzugte Ausführungsbeispiele der Erfindung werden im folgenden anhand von Ausführungsbeispielen und mit Bezug auf die Zeichnung, die einen integralen Teil der Offenbarung darstellt, ausführlich beschrieben. Es zeigen:
- **Fig. 1**: einen Unterkiefer mit einem Zahnersatz einschliesslich eines Kieferimplantates nach der Erfindung, ausschnittweise und vereinfacht, in einem Schaubild;
- **Fig. 2A**: einen Unterkiefer mit einem ersten Zahnersatz einschliesslich eines Kieferimplantates nach der Erfindung, in einem die Längsachse des Kieferimplantates enthaltenden Schnitt;
- **Fig. 2B**: einen Unterkiefer mit einem zweiten Zahnersatz einschliesslich eines Kieferimplantates nach der Erfindung, in einem die Längsachse des Kieferimplantates enthaltenden Schnitt;
- **Fig. 3A**: ein Kieferimplantat nach der Erfindung für einen Zahnersatz nach der Erfindung, in einem Schnitt durch die Längsachse des Kieferimplantates;
- **Fig. 3B**: eine Suprakonstruktion für einen Zahnersatz nach der Erfindung, in einem Schnitt durch die Längsachse der Suprakonstruktion;
- **Fig. 4**: die Ausbildung des Gewindeqürschnittes des selbstsschneidenden Aussengewindes des Kieferimplantates an verschie denen Stellen längs der Achse des Kieferimplantates, in vereinfachter, schematischer Darstellung;
- **Fig. 5**: das in Fig. 3A dargestellte Kieferimplantat, in einer seitlichen Ansicht;
- **Fig. 6A**: ein Kieferimplantat nach der Erfindung, in einer seitlichen Ansicht; und
- **Fig. 6B**: das in Fig. 6A dargestellte Kieferimplantat, in einem Schnitt senkrecht zur Längsachse des Kieferimplantates.

Es sei an dieser Stelle darauf hingewiesen, dass die Bezeichnungen 'distal' und 'proximal', die eigentlich nur für Teile des menschlichen Körpers oder ggfs. für bereits am menschlichen Körper implantierte Ersatzteile genau zutreffend sind, der Anschaulichkeit wegen auch für das Kieferimplantat und den Zahnersatz verwendet werden.

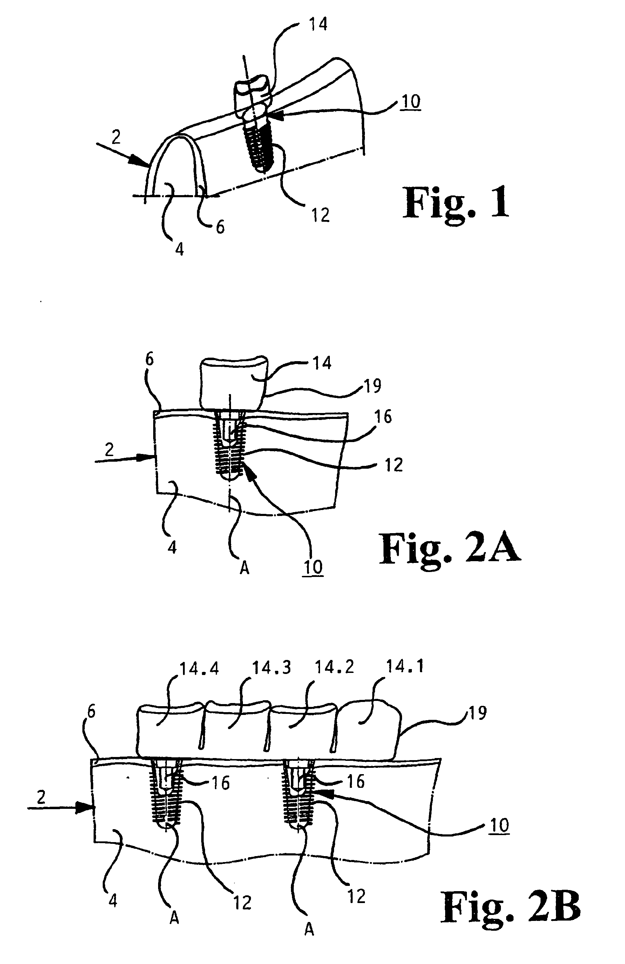

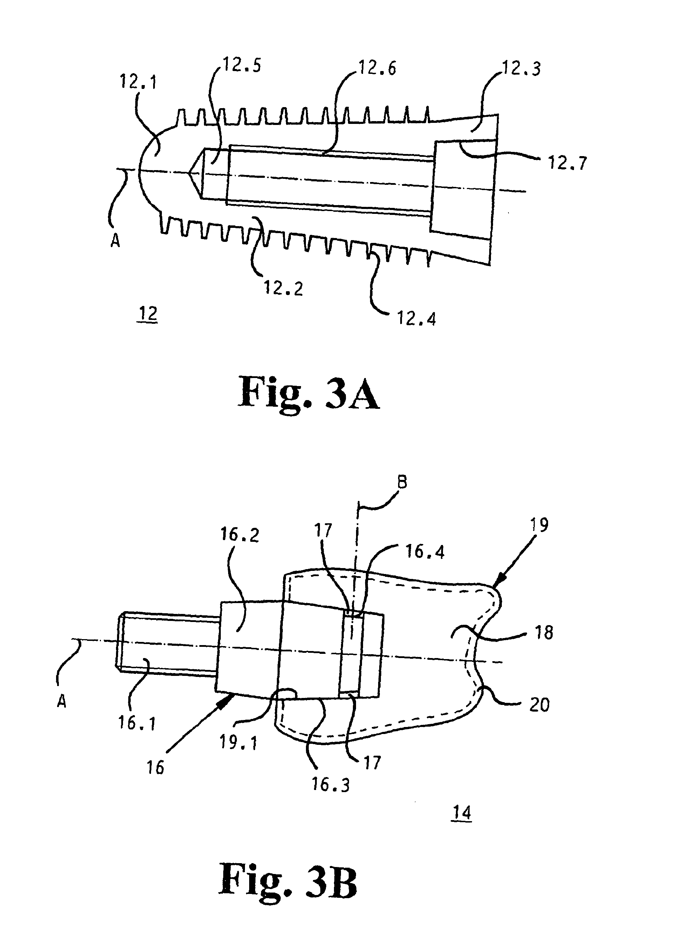

In **Fig. 1** ist ausschnittweise ein Unterkiefer **2** eines Patienten mit einem Kieferknochen **4** und dem den Kieferknochen **4** umgebenden Zahnfleisch **6** dargestellt. An der Stelle eines fehlenden echten Zahnes befindet sich ein Zahnersatz **10,** der im wesentlichen aus einem Kieferimplantat **12** und einer Suprakonstruktion **14** besteht. Der genauere Aufbau des Zahnersatzes **10** und insbesondere der Suprakonstruktion **14** ist aus den **Fig. 2A, 2B, 3A** und **3B** ersichtlich.

**Fig. 2A** zeigt einen Zahnersatz **10,** der einen einzelnen fehlenden Zahn ersetzt und ein Kieferimplantat **12** sowie eine Suprakonstruktion **14** umfasst. **Fig. 2B** zeigt einen Zahnersatz **10,** welcher gewissermassen brückenartig vier benachbarte Zähne ersetzt, mit zwei Kieferimplantaten **12** und einer darauf abgestützten Suprakonstruktion **14;** das in **Fig. 2B** rechts dargestellte Ende **14.1** der Suprakonstruktion **14** ersetzt einen hintersten Backenzahn und ist gewissermassen überhängend angeordnet, während die in **Fig. 2B** mit **14.4** und **14.2** bezeichneten Anteile der Suprakonstruktion **14** gewissermassen kronenartig und der in **Fig. 2B** mit **14.3** bezeichnete Anteil der Suprakonstruktion **14** gewissermassen brückenartig angeordnet sind.

Die Suprakonstruktion **14** gemäss **Fig. 2A** umfasst einen Verbindungskörper **16,** ein Gerüst **18** und eine Verblendung **20,** wobei das Gerüst **18** und die Verblendung **20** zusammen eine Kappe **19** bilden, wie dies aus **Fig. 3B** ersichtlich ist. Die Verblendung **20** ist der einzige Bestandteil des Zahnersatzes **10,** der bei korrekter Montage in der Mundhöhle des Patienten sichtbar ist. Das proximale Ende **16.1** des Verbindungskörpers **16** ist im Kieferimplantat **12** verschraubt ist und das distalen Ende **16.2** des Verbindungskörpers **16** ist mit dem Gerüst **18** verbunden, welches seinerseits von der Verblendung **20** ummantelt ist.

In **Fig. 3A** ist das Kieferimplantat **12** nach der Erfindung genauer dargestellt. Es weist einen Implantatfuss **12.1,** einen Implantatkörper **12.2** und einen Implantatkopf **12.3** auf. Die Aussenfläche des Kieferimplantates **12** ist im wesentlichen eine Rotationsfläche, welche zulaufend ausgebildet ist, wobei der Durchmesser des zur proximalen Lage am Patienten bestimmten Endes, im folgenden als proximales Implantatende bezeichnet, kleiner ist und der Durchmesser des zur distalen Lage am Patienten bestimmte Ende, im folgenden als distales Implantatende bezeichnet, grösser ist.

Der Implantatfuss **12.1** ist im Längsschnitt abgerundet und seine Aussenfläche weist annähernd oder genau die Form einer Kugelfläche auf; die axiale Abmessung des der Implantafusses **12.1** kann ggfs. verändert werden, um die totale Höhe des Kieferimplantates **12** an die im Kieferknochen verfügbare Höhe anzupassen bzw. einen eventuellen Knochenschwund zu berücksichtigen. Die Aussenfläche des Implantakörpers **12.2** weist im vorliegenden Ausführungsbeispiel die Form einer Kegelstumpffläche auf, das heisst, dass die Erzeugende des Implantatkörpers **12.2** eine Gerade ist; es ist aber auch möglich, den Implantatkörper **12.2** so auszubilden, dass die Erzeugende eine Kurve ist. Der Implantatkopf **12.3** besitzt eine Aussenfläche in Form einer Kegelstumpffläche, ist aber stärker der Aussenfläche des Implantatkopfes **12.3** wecke, im montierten Zustand des Kieferimplantates **10** eine dichtende Anlagefläche zu bilden, um zu verhindern, dass zwischen Zahnfleisch **6** bzw. Kieferknochen **4** einerseits und Kieferimplantat **10** anderseits Verschmutzungen eindringen können, welche Entzündungen verursachen könnten. Sowohl der Implantafuss **12.1** als auch der Implantakopf **12.3** können auch andere geeignete Formen aufweisen als die oben beschriebenen.

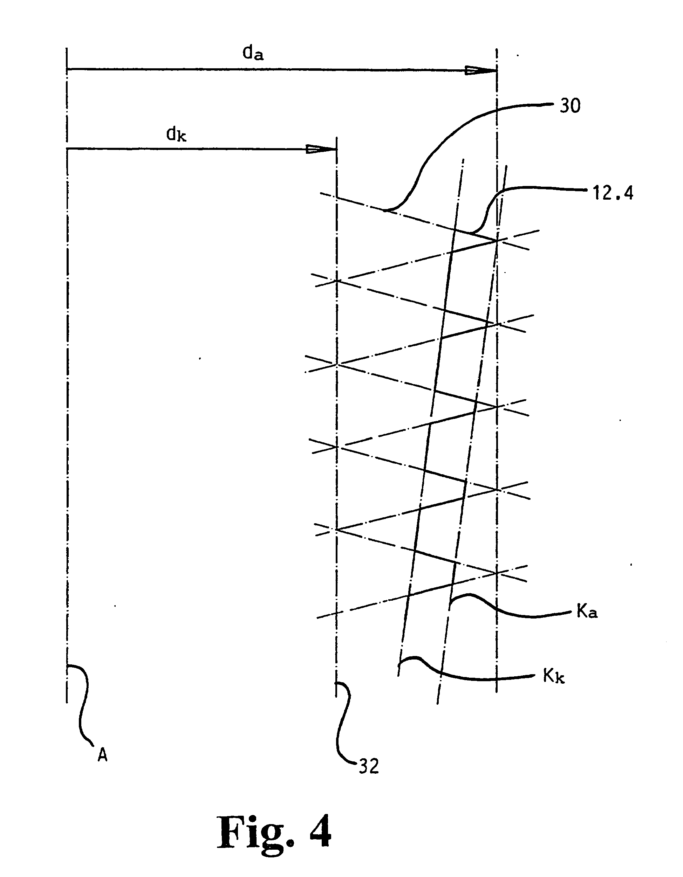

Der Implantatkörper **12.2** ist mit einem selbstschneidenden Aussengewinde **12.4** versehen, dessen genaue Ausbildung weiter unten mit Bezug auf **Fig. 4** erläutert wird. Hier sei nur vermerkt, dass es zur Anpassung an den spiegelsymmetrischen Aufbau des Kiefers und die spiegelsymmetrische Beanspruchung der Gebisshälften vorteilhaft sein kann, an den Kieferimplantaten für die eine Kieferseite beispielsweise ein Rechtsgewinde und für die andere, gegenüberliegende Kieferseite entsprechend ein Linksgewinde vorzusehen, obwohl dadurch erhöhte Anforderungen betreffend Herstellung, Lagerhaltung und Fertigkeit des Dentisten auftreten.

Das Kieferimplantat **12** weist eine im wesentlichen rotationssymmetrische, zylindrische Längsausnehmung **12.5** auf, wobei im vorliegenden Beispiel die Längsachse **A** des selbstschneidenden Aussengewindes **12.4** mit der Längsachse der Längsausnehmung **12.5** zusammenfallen, was aber nicht in jedem Falle so sein muss. Die Längsausnehmung **12.5** erstreckt sich im wesentlichen über den Bereich des Implantatkörpers **12.2** und des Implantatkopfes **12.3.** Im Bereich des Implantatkörpers **12.2** weist die Längsausnehmung ein Innengewinde **12.6** und im Bereich des Implantatkopfes **12.3** als dichtende Anlagefläche nach der Montage und als Zentrier- und Führungsfläche während der Montage des Verbindungskörpers **16** einen Innenkonus **12.7** auf.

Vorzugsweise wird das Innengewinde **12.6** so als Links- bzw. Rechtsgewinde gewählt, dass ein Einschraubvorgang in dieses Innengewinde **12.6** keine Lockerung des im Kieferknochen **4** eingeschraubten Kieferimplantates **12** zur Folge hat. Zwar hat bei einer solchen Konfiguration der Gewinde **12.4** und **12.6** ein zu einem späteren Zeitpunkt ggfs. notwendiges Ausschrauben des Verbindungskörpers **16** tendenziell eine Lockerung des Sitzes des lmplantakörpers **12** relativ zum Kieferknochen **4** zur Folge; dies ist aber nicht gravierend, da zu einem solchen späteren Zeitpunkt das Kieferimplant **12** bereits von neue gebildeter Knochensubstanz umwachsen und damit gehalten ist.

Die Implantierung des Kieferimplantates **12** spielt sich wie folgt ab: nach der Extraktion der Reste des zu ersetzenden Zahnes, natürlich einschliesslich der Wurzel, wird im Kieferknochen eine Ausnehmung zur Aufnahme des Kieferimplantates **12** vorgebohrt. Hierzu wird ein nicht dargestellter Bohrer verwendet, dessen Aussenfläche im wesentlichen gleich ist wie die Rotationsfläche des Kieferimplantates **12** und der somit drei Bereiche aufweist, die dem Implantafuss **12.1,** dem Implantakörper **12.2** und dem Implantatkopf **12.3** entsprechen. Bei der anschliessenden Implantierung des Kieferimplantates **12** schneidet sich das selbstschneidende Aussengewinde **12.4** ausgehend von der Innnenwandung dieser Bohrung in den Kieferknochen **6** ein. Eine Deformation des Kieferknochens **6,** welche diesen zu stark beanspruchen und ggfs. sprengen würde, findet nicht statt. Eine geringe Spannung im Kieferknochen **6** fördert dagegen erfahrungsgemäss die Bildung von Knochensubstanz und damit das Umwachsen des Kieferimplantates **12** durch Knochensubstanz des Kieferknochens.

**Fig. 3B** zeigt die Suprakonstruktion **14,** welche hier den Verbindungskörper **16** und die Kappe **19** umfasst. Die Grenze zwischen dem Gerüst **18** und der Kappe **19** ist durch eine gestrichelte Linie angedeutet. Die Kappe **19** könnte bei geeigneter Materialauswahl auch das Gerüst **18** und die Verblendung **20** integrieren.

Der Verbindungskörper **16** weist einen proximal zu liegen kommenden Teil **16.1** auf, welcher ein Aussengewinde **16.2** besitzt, das zum Innengewinde **12.6** des Kieferimplantates **12** komplementär ist, und das in das bereits implantierte Kieferimplantat **12** eingeschraubt wird, um den Verbindungskörper **16** am Kieferimplantat **12** zu fixieren. Der Verbindungskörper **16** besitzt ferner, in Längsrichtung an das Aussengewinde **16.1** anschliessend, eine zulaufende Fläche **16.2** bzw. einen hier konischen Bereich **16.2** auf, der komplementär zur konischen Fläche **12.7** bzw. zum Innenkonus **12.7** des Kieferimplantates **12** geformt ist. Der Zweck der konischen Ausbildung der Flächen **12.7** und **16.2** ist es, eine dichtende gegenseitige Anlage zu erhalten. Damit vermeidet man das Eindringen von Verunreinigungen zwischen Kieferimplantat **12** und Verbindungskörper **16;** wodurch man nicht nur die Bildung von Infektionsherden verhindert sondern auch ein ggfs. später notwendiges Ausschrauben des Verbindungskörpers 16 aus dem Kieferimplantat **12** erleichtert. An den in proximaler Richtung zulaufenden konischen Bereich **16.2** des Verbindungskörpers schliesst sich als Positionierungsfläche **16.3** ein zweiter konischer Bereich an, der in distaler Richtung zulaufend ausgebildet ist.

Dieser zweite konischen Bereich enthält in der Nähe seines distalen Endes eine Ausnehmung **16.4,** beispielsweise in Form einer umlaufenden Nut. Am Ort dieser Ausnehmung **16.4** entsteht ein Hohlraum **17,** der durch den Verbindungskörper **16** und das Gerüst **18** der die Kappe **19** begrenzt ist., und der zur Aufnahme eines Klebstoffes oder Zementes oder des vorderen Endes einer quer einschraubbaren Fixierschraube bestimmt ist, von welcher nur die Achse **B** dargestellt ist.

Die Kappe **19** weist einen Innenkonus auf, der eine zur Positionierungsfläche **16.3** passende Komplementärfläche **19.1** bildet bzw. hier komplementär zum Innenkonus **16.3** des Verbindungskörpers **16** ausgebildet ist, der aber keinen der Nut **16.4** des Verbindungskörpers **16** entsprechenden Kragen besitzt. Der dadurch zwischen dem Verbindungskörper **16** und der Kappe **19** gebildete ringförmige Hohlraum **17** dient wie oben erwähnt zur Aufnahme von nicht dargestelltem Klebstoff bzw. Zement, mit dessen Hilfe die Kappe **19** in üblicher Weise am Verbindungskörper **16** befestigt ist.

Wie schon erwähnt, weist das Aussengewinde **12.4** des Kieferimplanates **12** erfindungsgemäss eine besondere Form auf. Der Querschnitt des Aussengewindes **12.4** ist abgeleitet von einem fiktiven Gewinde, dessen Querschnitt ein spitzwinkliges Dreieck **30** ist, das schraubenlinienförmig um einen fiktiven zylindrischen Körper **32** umläuft. In **Fig. 4** sind diese spitzwinkligen Dreiecke **30** in die Schnittebene bzw. in die Zeichnungsebene gedreht, was geometrisch nicht ganz korrekt aber sehr anschaulich ist.. Die Achse dieses fiktiven zylindrischen Körpers **32** fällt mit der Achse **A** des Kieferimplantates **12** zusammen und ist daher auch mit **A** bezeichnet. Der Kerndurchmesser des fiktiven Gewindes ist mit **dₖ** und sein Aussendurchmesser mit **dₐ** bezeichnet. Das tatsächlich vorhandene Gewinde, dessen Kontur in **Fig. 4** durch einen verdickten Linienzug angegeben ist, unterscheidet sich vom oben beschriebenen fiktiven Gewinde, indem der Querschnitt des tatsächlichen Gewindes jeweils an jeder axialen Stelle sein durch einen bestimmten Ausschnitt aus dem Dreieck **30** des Querschnitts des fiktiven Gewindes gebildet ist. Dabei sind der sich kontinuierlich verändernde Kerndurchmesser und der sich kontinuierlich verändernde Aussendurchmesser des tatsächlichen Gewindes durch zwei hier parallele und konische Flächen **Kₖ** bzw. **Kₐ** bestimmt, wobei der Öffnungswinkel der entsprechenden Konen weiter oben summarisch als Öffnungswinkel derjenigen Kegelstumpffläche bezeichnet, die den Implantatkörper **12.2** bildet. Die konische Fläche **Kₐ** bildet die Hüllfläche an den Implantatkörper **12.2,** und die konischen Fläche **Kₖ** begrenzt den eigentlichen konischen Implantatkörper **12.2.**

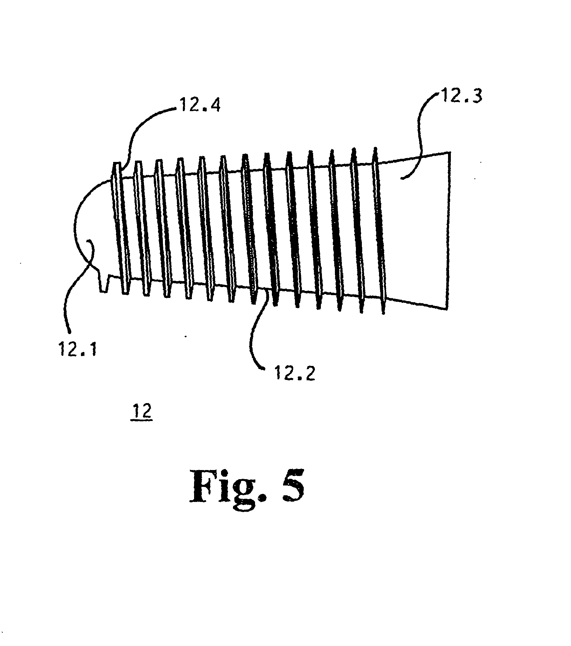

**Fig. 5** zeigt eine seitliche Ansicht des Kieferimplantates **12** mit dem speziellen selbstschneidenden Ausssengewinde, das mit Bezug auf **Fig. 4** beschrieben wurde, und zwar in geometrisch korrekter Darstellung. Es ist deutlich zu erkennen, dass die Steigung des selbstschneidenden Aussengewindes **12.4** so gewählt ist, dass jeweils zwischen benachbarten Gewindegängen ein Bereich der konischen Aussenfläche **Kₖ** des Implantatkörpers **12.2** vorhanden ist.

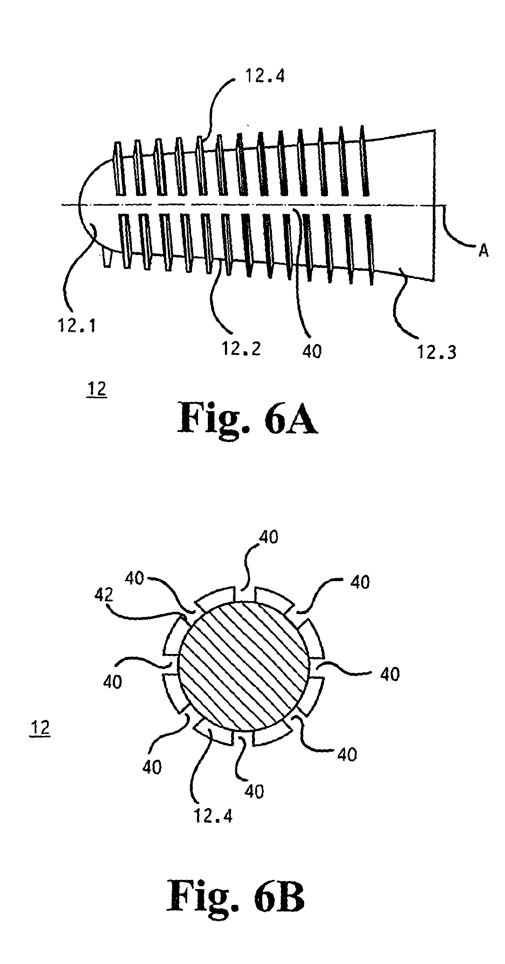

In den **Fig. 6A** und **6B** ist ein Kieferimplantat **12** nach der Erfindung in einer seitlichen Ansicht bzw. in einem Schnitt senkrecht zur Achse **A** dargestellt. Hierbei ist gemäss **Fig. 6B** das selbstschneidende Gewinde **12.4** in mehreren Längsbereichen **40** unterbrochen, wobei in **Fig. 6A** nur einer dieser Bereiche **40** dargestellt ist; die Längsbereiche **40** bilden Spannuten für die beim Implantieren des Kieferimplantates **12** entstehenden Knochenspäne des Kieferknochens **4.** Gleichzeitig werden an den Begrenzungen des Restgewindes Schneiden **42** des selbstschneidenden Gewindes **12.4** gebildet. Die in **Fig. 6A** dargestellten Längsbereiche **40** verlaufen längs den Erzeugenden der Rotationsfläche des Implantakörpers **12.4,** könnten beispielsweise aber auch die Form einer Schraubenlinie haben, mit einem Steigungswinkel, der einiges grösser ist als der Steigungswinkel des selbstschneidenden Aussengewindes **12.4**.

## Patentansprüche

1. Kieferimplantat (12) dessen äussere Rotationsfläche im Wesentlichen eine von seinem am Patienten distalen zu seinem am Patienten proximalen Ende zulaufende Kegelstumpffläche (Ka) ist und dessen Kerndurchmesser durch eine innere vom distalen zum proximalen Ende zulaufende Kegelstumpffläche (Kk) ist, die zur erstgenannten Kegelstumpffläche (Ka) koaxial ist, wobei das Kieferimplantat (12) ein selbstschneidendes Aussengewinde (12.4) besitzt, und Gewindequerschnitte aufweist, die durch kontinuierlich ändernde Ausschnitte aus einem fiktiven, spitzwinkligen Dreieck (30) gebildet sind
- das einen Grundlinienbereich und einen Spitzenbereich besitzt,
- welches fiktive Dreieck schraubenlinienförmig um einen zur erstgenannten Kegelstumpffläche (Ka) koaxialen, fiktiven zylindrischen Körper (32) umläuft, wobei der Kerndurchmesser (dk) des fiktiven Dreiecks durch den koaxialen, fiktiven Zylinderkörper (32) gebildet ist und der Aussendurchmesser (da) durch eine äussere, fiktive Zylinderfläche mit Aussendurchmesser (da) gebildet ist,
- dass die Ausschnitte aus dem fiktiven Dreieck im proximalen Bereich Ausschnitte aus dem Grundlinienbereich des fiktiven Dreiecks und im distalen Bereich Ausschnitte aus dem Spitzenbereich des fiktiven Dreiecks sind, und wobei das selbstschneidende Aussengewinde (12.4) in mehreren Längsbereichen unterbrochen ist und diese Längsbereiche Spannuten bilden für Knochenspäne, und dass an Begrenzungen des Restgewindes Schneiden (42) gebildet sind.

2. Kieferimplantat (12) nach Anspruch 1,
**dadurch gekennzeichnet,**
**dass** die Steigung des selbstschneidenden Aussengewindes (12.4) so gewählt ist, dass einander gegenüberliegende Gewindeflanken benachbarter Gewindegänge im Gewindekern durch Abschnitte der Kegelstumpffläche (**Kk**) getrennt sind.

3. Kieferimplantat (12) nach einem der obigen Ansprüche,
**dadurch gekennzeichnet,**
**dass** die Flankenwinkel zweier Flanken eines Gewindeganges des selbstschneidenden Aussengewindes (12.4) unter verschiedenen Winkeln zur Kegelstumpffläche (**Kk**) des Implantatkörpers (12.2) angeordnet sind, derart, dass das Aussengewinde (**12.4**) eine sägezahnähnliche Kontur aufweist.

4. Kieferimplantat (**12**) nach einem der obigen Ansprüche,
**dadurch gekennzeichnet,**
**dass** die Flanken eines Gewindeganges des selbstschneidenden Aussengewindes (12.4) unter einem Winkel zusammentreffen, der im Bereich zwischen etwa 0,5° und etwa 40° liegt.

5. Kieferimplantat (12) nach mindestens einem der obigen Ansprüche,
**dadurch gekennzeichnet,**
**dass** es einen an seinem proximalen Ende des Implantatkörpers (**12.2**) anschliessenden Implantatfuss (**12.1**) aufweist, der sich verjüngt.

6. Kieferimplantat (**12**) nach Anspruch **5**,
**dadurch gekennzeichnet,**
**dass** der Implantatfuss (**12.1**) sich kugelflächenartig verjüngt.

7. Kieferimplantat (12) nach einem der obigen Ansprüche,
**dadurch gekennzeichnet,**
**dass** es einen an Seinem proximalen Ende des Implantatkörpers (12.2) anschliessenden Implantatkopf (**12.3**) aufweist, dessen Durchmesser mit steigendem Abstand vom Implantatkörper **(12.2)** zunimmt.

8. Kieferimplantat **(12)** nach Anspruch **7,**
**dadurch gekennzeichnet,**
**dass** der Durchmesser des Implantatkopfes **(12.3)** kegelstumpfförmig zunimmt.

9. Kieferimplantat **(12)** nach einem der obigen Ansprüche,
**dadurch gekennzeichnet,**
**dass** es eine sackbohrungsartige Längsausnehmung (**12.5**) besitzt, welche über mindestens einen Teil ihrer Länge mit einem Innengewinde (**12.6**) versehen ist.

10. Kieferimplantat (**12**) nach Anspruch 9,
**dadurch gekennzeichnet,**
**dass** die Längsausnehmung (**12.5**) einen Eintrittsteil (**12.7**) besitzt, der, vorzugsweise kegelstumpfförmig, zuläuft.

11. Kieferimplantat **(12)** nach Anspruch **10,**
**dadurch gekennzeichnet,**
**dass** der Eintrittsteil (12.7) kegelstumpfförmig zuläuft.

## Claims

1. Jaw implant (12), of which the outer surface of rotation is substantially a truncated cone surface (Kₐ) that tapers from its end distal on the patient to its end proximal on the patient and of which the core diameter is through an inner truncated cone surface (Kₖ) that tapers from the distal end to the proximal end and is coaxial with the first-mentioned truncated cone surface (Kₐ), wherein the jaw implant (12) has a self-cutting external thread (12.4) and thread cross-sections which are formed by continuously changing sections of a hypothetical, acute triangle (30),
- which has a base line region and a pointed region,
- which hypothetical triangle helically rotates around a hypothetical cylindrical body (32) that is coaxial with the first-mentioned truncated cone surface (kₐ), wherein the core diameter (dₖ) of the hypothetical triangle is formed by the coaxial, hypothetical cylindrical body (32) and the external diameter (dₐ) is formed by an outer, hypothetical cylindrical surface with external diameter (dₐ),
- that the sections of the hypothetical triangle in the proximal region are sections of the base line region of the hypothetical triangle and in the distal region are sections of the pointed region of the hypothetical triangle,
and wherein
the self-cutting external thread (12.4) is interrupted in a plurality of longitudinal regions and these longitudinal regions form fixing slots for chips of bone, and that cutting edges (42) are formed at the boundaries of the residual thread.

2. Jaw implant (12) according to claim 1, **characterised in that** the pitch of the self-cutting external thread (12.4) is selected in such a way that mutually opposing thread flanks of adjacent turns in the thread root are separated by portions of the truncated cone surface (Kₖ).

3. Jaw implant (12) according to either of the preceding claims, **characterised in that** the flank angle of two flanks of a turn of the self-cutting external thread (12.4) are arranged at different angles to the truncated cone surface (Kₖ) of the implant body (12.2) in such a way that the external thread (12.4) has a saw tooth-like contour.

4. Jaw implant (12) according to any one of the preceding claims, **characterised in that** the flanks of a turn of the self-cutting external thread (12.4) meet at an angle which is in the range between about 0.5° and about 40°.

5. Jaw implant (12) according to at least one of the preceding claims, **characterised in that** it comprises an implant foot (12.1) that adjoins at its proximal end of the implant body (12.2) and which tapers.

6. Jaw implant (12) according to claim 5, **characterised in that** the implant foot (12.1) tapers in the manner of a conical surface.

7. Jaw implant (12) according to any one of the preceding claims, **characterised in that** it comprises an implant head (12.3) that adjoins at its proximal end of the implant body (12.2) and of which the diameter increases with increasing distance from the implant body (12.2).

8. Jaw implant (12) according to claim 7, **characterised in that** the diameter of the implant head (12.3) increases in the manner of a truncated cone.

9. Jaw implant (12) according to any one of the preceding claims, **characterised in that** it has a blind hole-like longitudinal recess (12.5) which is provided over at least some of its length with an internal thread (12.6).

10. Jaw implant (12) according to claim 9, **characterised in that** the longitudinal recess (12.5) has an entry part (12.7) which tapers, preferably in the manner of a truncated cone.

11. Jaw implant (12) according to claim 10, **characterised in that** the entry part (12.7) tapers in the manner of a truncated cone.

## Revendications

1. Implant dentaire (12) dont la surface de rotation extérieure est pour l'essentiel une surface tronconique (Kₐ) resserrée de son extrémité distale sur le patient à son extrémité proximale sur le patient et dont le diamètre de corps traverse une surface tronconique intérieure (Kₖ) resserrée de l'extrémité distale à l'extrémité proximale, qui est coaxiale de la première surface tronconique (Kₐ), l'implant dentaire (12) possédant un filetage extérieur autotaraudant (12.4) et des sections filetées qui sont formées par des sections, variant en continu, d'un triangle à angle aigu fictif (30)
- qui possède une partie de ligne de base et une partie de pointe,
- lequel triangle fictif s'enroule en spirale autour d'un corps cylindrique fictif (32) coaxial de la première surface tronconique (Ka) mentionnée, le diamètre de corps (dₖ) du triangle fictif étant formé par le corps cylindrique fictif (32) coaxial et le diamètre extérieur (dₐ) par la surface extérieure fictive du cylindre avec le diamètre extérieur (dₐ),
- les sections du triangle fictif étant dans la partie proximale des sections de la partie de ligne de base du triangle fictif et dans la partie distale des sections de la partie de pointe du triangle fictif,
et dans lequel le filetage extérieur autotaraudant (12.4) est discontinu sur plusieurs parties de la longueur et ces parties de la longueur forment des gorges de retenue de copeaux osseux, et en ce que des lames (42) sont formées sur les délimitations du filetage restant.

2. Implant dentaire (12) selon la revendication 1, **caractérisé en ce que** la pente du filetage extérieur autotaraudant (12.4) est choisie de telle sorte que les flancs se faisant face de tours voisins du filet soient séparés au niveau du fond de filet par des sections de la surface tronconique (Kₖ).

3. Implant dentaire (12) selon l'une des revendications précédentes, **caractérisé en ce que** l'angle de flanc de deux flancs d'un tour de filet du filetage extérieur autotaraudant (12.4) est disposé selon différents angles par rapport à la surface tronconique (Kₖ) du corps d'implant (12.2), de telle sorte que le filetage extérieur (12.4) présente un contour en dents de scie.

4. Implant dentaire (12) selon l'une des revendications précédentes, **caractérisé en ce que** les flancs d'un tour de filet du filetage extérieur autotaraudant (12.4) se rencontrent en formant un angle compris entre environ 0,5° et environ 40°.

5. Implant dentaire (12) selon l'une au moins des revendications précédentes, **caractérisé en ce qu'**il présente un pied d'implant (12.1) se raccordant à son extrémité proximale de corps d'implant (12.2) et qui se resserre.

6. Implant dentaire (12) selon la revendication 5, **caractérisé en ce que** le pied de l'implant (12.1) se resserre en forme de surface de sphère.

7. Implant dentaire (12) selon l'une des revendications précédentes, **caractérisé en ce qu'**il possède une tête d'implant (12.3) se raccordant à son extrémité proximale de corps d'implant (12.2), dont le diamètre augmente avec la distance par rapport au corps d'implant (12.2).

8. Implant dentaire (12) selon la revendication 7, **caractérisé en ce que** le diamètre de la tête d'implant (12.3) augmente en forme de tronc de cône.

9. Implant dentaire (12) selon l'une des revendications précédentes, **caractérisé en ce qu'**il possède un évidement longitudinal (12.5) en forme de trou borgne, qui est doté sur au moins une partie de sa longueur d'un filetage intérieur (12.6).

10. Implant dentaire (12) selon la revendication 9, **caractérisé en ce que** l'évidement longitudinal (12.5) possède une partie d'entrée (12.7) qui se resserre, de préférence en forme de tronc de cône.

11. Implant dentaire (12) selon la revendication 10, **caractérisé en ce que** la partie d'entrée (12.7) se resserre en forme de tronc de cône.
